# FASCICULE DE BREVET EUROPEEN

(11) **EP 0 587 475 B1**
(45) Date de publication et mention de la délivrance du brevet: **03.07.1996**
(21) Numéro de dépôt: 93402124.7
(22) Date de dépôt: 31.08.1993
(51) Int. Cl.: F16L 11/14, F16L 11/16

(54) **Tube métallique flexible gainé polyfluorure de vinylidène à flexion améliorée**
Flexibles Metallrohr mit verbesserter Biegsamkeit und mit Schicht aus Polyvinylidenfluorid
Flexible metal tube with enhanced bending and with a layer of polyvinylidene fluoride

(30) Priorité: 10.09.1992 FR 9210810
(43) Date de publication de la demande: 16.03.1994
(73) Titulaire: ELF ATOCHEM S.A., F-92800 Puteaux (FR)
(72) Inventeur: Strassel, Albert, F-69600 Oullins (FR)
(74) Mandataire: Rochet, Michel

(56) Documents cités:
- GB-A- 373 302
- US-A- 3 771 570

## Description

La présente invention concerne un tube métallique flexible gainé par une couche de polyfluorure de vinylidène caractérisé en ce que, pour améliorer la flexibilité de l'ensemble, est interposée une couche d'élastomère thermoplastique polyuréthanne entre la paroi métallique et la couche de polyfluorure de vinylidène

Un tube métallique flexible est constitué de façon connue de spires s'enroulant par chevauchement et/ou s'emboîtant successivement les unes sur les autres. Le chevauchement ou l'emboîtement des spires les unes dans les autres donne un aspect sinusoïdal à la surface du tube métallique. Par ailleurs, du fait de la constitution même du tube métallique flexible, sont créées des interstices entre les spires qui le rendent perméable aux gaz et aux liquides et empèchent son utilisation sans gainage externe ou interne par un matériau imperméable.

Pour réaliser cette étanchéité, en particulier pour les flexibles utilisés dans l'exploitation pétrolière ou des gaz, les tubes métalliques peuvent être gainés de polymère fluoré et plus particulièrement de polyfluorure de vinylidène. Le polyfluorure de vinylidène de par sa cristallinité, sa quasi insensibilité et imperméabilité aux liquides et aux gaz, ainsi que sa résistance à une température de l'ordre de 150 ° C pendant de longues années, est un matériau de choix pour le gainage des tubes métalliques flexibles. Toutefois, la rigidité du polyfluorure de vinylidène ne permet pas de l'utiliser tel quel, car, en particulier dans le cas de tube de gros diamètre, le rayon d'enroulement est très limité.

Pour remédier à cet inconvénient, il est possible de plastifier le polyfluorure de vinylidène, mais la pratique montre que les plastifiants migrent hors du polymère lui rendant sa rigidité d'origine après un plus ou moins long délai dépendant également de la température des fluides circulant dans le tube.

Le tube objet de la présente invention possède une aptitude à l'enroulement amélioré d'au moins 30 % par rapport à un tube équivalent exempt de couche d'élastomère de polyuréthanne. Il est remarqué que cette aptitude à l'enroulement s'améliore au cours du vieillissement thermique de l'ensemble. Cette amélioration est même constatée dans le cas où le tube métallique flexible est gainé initialement de polyfluorure de vinylidène plastifié et qu'au cours du vieillissement thermique le plastifiant s'élimine.

Le but de l'invention est de conserver au tube métallique le maximum de sa flexibilité en évitant au polyfluorure de vinylidène de pénétrer, lors du gainage, dans les interstices d'articulation du tube tout en assurant l'étanchéité entre le tube métallique flexible et la gaine de polyfluorure de vinylidène.

Pour obtenir ces résultats, est interposée entre le tube métallique flexible et la gaine de polyfluorure de vinylidène une couche d'élastomère thermoplastique polyuréthanne.

Pour les besoins de l'invention, il est recommandé d'utiliser un élastomère thermoplastique polyuréthanne de dureté shore A inférieure à 92 mesurée selon la norme DIN 53505. En outre il est également recommandé que cet élastomère subisse une forte diminution de viscosité en cours de vieillissement thermique. Cette diminution de viscosité est de préférence d'au moins 60 % après 30 jours à 120° C. L'élastomère thermoplastique polyuréthanne possède habituellement une viscosité à 200° C comprise dans les limites définies ci-dessous. Les valeurs tiennent compte de la correction de RABINOWVITCH appliquée aux liquides non newtoniens.

| **Vitesse de cisaillement corrigée s-1** | **Viscosité en kPa.s** | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

La vitesse de cisaillement est également le gradient de vitesse de déformation au cisaillement.

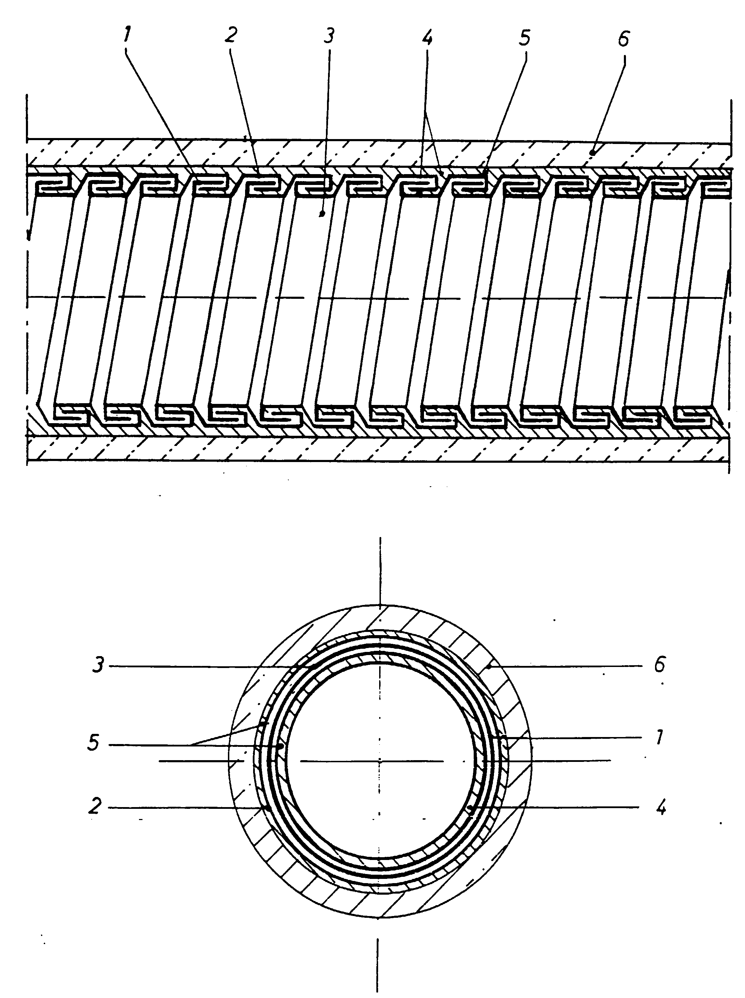

La figure annexée schématise les coupes d'un tube selon l'invention. Les emboîtements des articulations (1,2) du tube métallique flexible (3) créent des interstices et des espaces (4) entre les spires métalliques. La couche (5) d'élastomère thermoplastique polyuréthanne recouvre le tube métallique, tout en remplissant les espaces entre les spires métalliques. Cette couche d'élastomère thermoplastique polyuréthanne sert d'intermédiaire entre le tube métallique flexible et la couche externe de polyfluorure de vinylidène (6).

Le polyfluorure de vinylidène servant de gaine est choisi parmi les homopolymères et les copolymères possédant au moins 50 % de motifs fluorure de vinylidène, ainsi que parmi les homopolymères et copolymères plastifiés. Le polyfluorure de vinylidène plastifié contient habituellement moins de 16 % de plastifiant habituellement dérivé d'un polyester.

Il n'est pas exclu que soient mélangés au polyfluorure de vinylidène d'autres polymères ou copolymères fluorés ou non dans la mesure où le polyfluorure de vinylidène reste majoritaire afin de limiter au maximum la perte de ses propriétés de résistance mécanique et chimique.

Les méthodes habituelles connues de gainage des fils ou des tubes métalliques s'appliquent à la fabrication du tube objet de l'invention. Il est possible par exemple de coextruder simultanément le polyfluorure de vinylidène et l'élastomère thermoplastique polyuréthanne au moyen de deux extrudeuses et d'une boîte de répartition des flux en tête d'équerre recevant en son centre le tube flexible métallique à gainer. Il est également possible de gainer classiquement par extrusion-gainage le tube flexible métallique avec l'élastomère thermoplastique polyuréthanne puis ensuite dans une seconde extrusion-gainage de revêtir l'ensemble d'une couche de polyfluorure de vinylidène.

Le présent tube possède de préférence une couche intermédiaire d'élastomère thermoplastique de polyuréthanne d'épaisseur variant de 0,1 à 2 mm mesurée à partir du sommet du tube flexible métallique, c'est à dire du sommet des spires du tube métallique flexible. La couche extérieure de polyfluorure de vinylidène peut varier de 1 à 10 mm d'épaisseur. Le tube objet de l'invention est particulièrement adapté pour l'exploitation pétrolière et des gaz dont le tube métallique flexible peut posséder un diamètre utile de l'ordre de 20 à 400 mm ou plus.

Les exemples suivants illustrent l'invention sans toutefois la limiter.

### EXEMPLE 1.

Autour d'un tube flexible d'acier de 32 mm de diamètre constitué de spires entre lesquelles se trouvent des creux et interstices permettant son articulation sont gainées par extrusions successives : une couche de polyester-polyuréthanne (ESTANE ^{R} 58271) de 0,5 mm d'épaisseur à partir du sommet des spires, puis une couche de 5 mm d'épaisseur de polyfluorure de vinylidène (FORAFLON 1000 HD) ; (Echantillon 1). Le polyester-polyuréthanne possède une dureté shore A de 88 et une diminution de viscosité de plus de 70 % en 30 jours à 120° C.

A titre comparatif est réalisé dans les mêmes conditions , le même tube sans couche intermédiaire de polyuréthanne (Echantillon 2).

Les deux tubes sont comparés dans les conditions ci-après.

Le tube gainé est placé sur deux supports fixes. Au moyen d'un galet de cintrage de 75 mm de rayon, on appuie à équidistance des points d'appui du tube. Une pression de 50 bars est exercée. Le tube se cintre autour du galet. La hauteur d'enfoncement du galet indique l'aptitude à la déformation du tube flexible. La hauteur maximum est de 170 mm ; elle correspond à l'enroulement parfait du tube sur le rayon de courbure du galet. S'il y a rupture du flexible au cours de l'enfoncement, la hauteur est notée. Plus elle est élevée, plus le flexible est apte à la flexion.

| Température | Hauteur d'enfoncement | |
|---|---|---|
| | Echantillon 1 | Echantillon 2 |
| 20° C | 170 mm pas de rupture | 120 mm rupture |
| -30° C | Rupture à 150 mm | Rupture à 80 mm |

### EXEMPLE 2

Les échantillons 3 et 4 sont réalisés de la même façon que les échantillons 1 et 2, mais le polyfluorure de vinylidène est plastifié à 7,5 % en poids de N-butylbenzènesulfonamide.

L'échantillon 3 possède une couche intermédiaire de polyester-polyuréthanne de 1 mm d'épaisseur au dessus des sommets des spires et une couche externe de 6 mm d'épaisseur de polyfluorure de vinylidène plastifié.

L'échantillon 4 ne possède pas de couche intermédiaire de polyester-polyuréthanne.

Des essais de cintrages successifs des tubes gainés sont effectués sur un mandrin de 68 mm de rayon. Entre chaque nouveau cintrage les tubes sont placés 1 heure à -10° C.

L'échantillon 3 a pu être cintré cinq fois sans rupture.

L'échantillon 4 blanchit après le quatrième cintrage et se fend au cinquième.

Des tubes échantillons 3 et 4 sont vieillis un mois à 150° C en étuve ventilée.

Le même essai de cintrage est ensuite réalisé à -10° C. L'échantillon 3 blanchit au troisième cintrage et se casse au quatrième.

L'échantillon 4 se casse au premier cintrage.

## Revendications

1. Tube métallique flexible (3) gainé d'une couche de polyfluorure de vinylidéne (6) caractérisé en ce qu'est interposée une couche d'élastomère thermoplastique polyuréthanne (5) entre la paroi métallique et la couche de polyfluorure de vinylidène.

2. Tube selon la revendication 1 caractérisé en ce que l'élastomère thermoplatique polyuréthanne (5) possède une dureté shore A inférieure à 92.

3. Tube selon l'une des revendications 1 ou 2 caractérisé en ce que l'élastomère thermoplastique polyuréthanne (5) subit une diminution de viscosité d'au moins 60 % après 30 jours à 120° C.

4. Tube selon l'une des revendications 1 à 3 caractérisé en ce que l'élastomère thermoplastique polyuréthanne (5) possède une viscosité à 200° C comprise dans les limites ci-après :
| **Vitesse de cisaillement corrigée s-1** | **Viscosité en kPa.s** | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

5. Tube selon l'une des revendications 1 à 4 caractérisé en ce que la couche intermédiaire d'élastomère thermoplastique de polyuréthanne (5) possède une épaisseur de 0,1 à 2 mm à partir du sommet du tube flexible métallique.

## Patentansprüche

1. Flexibles metallisches Rohr (3), das mit einem Überzug aus Polyvinylidenfluorid (6) umhüllt ist,
dadurch gekennzeichnet, daß
zwischen der Metallwand und dem Polyvinylidenfluorid-Überzug eine Schicht aus einem thermoplastischen Polyurethanelastomer (5) vorgesehen ist.

2. Rohr nach Anspruch 1,
dadurch gekennzeichnet, daß
das thermoplastische Polyurethanelastomer (5) eine Shore-A-Härte von weniger als 92 aufweist.

3. Rohr nach Anspruch 1 oder 2,
dadurch gekennzeichnet, daß
sich die Viskosität des thermoplastischen Polyurethan-elastomers (5) nach 30 Tagen bei 120 °C um mindestens 60 % verringert.

4. Rohr nach einem der Ansprüche 1 bis 3,
dadurch gekennzeichnet, daß
das thermoplastische Polyurethanelastomer (5) eine Viskosität bei 200 °C im nachfolgend angegebenen Bereich aufweist:
| Korrigierte Schergeschwindigkeit [s⁻¹] | Viskosität [kPa·s] | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

5. Rohr nach einem der Ansprüche 1 bis 4,
dadurch gekennzeichnet, daß
das thermoplastische Polyurethanelastomer (5) ab dem äussersten Teil des flexiblen metallischen Rohrs eine Dicke von 0,1 bis 2 mm aufweist.

## Claims

1. Flexible metal pipe (3) sheathed with a poly(vinylidene fluoride) (6) layer, characterized in that a polyurethane thermoplastic elastomer (5) layer is interposed between the metal wall and the poly(vinylidene fluoride) layer.

2. Pipe according to Claim 1, characterized in that the polyurethane thermoplastic elastomer (5) has a Shore A hardness of less than 92.

3. Pipe according to either of Claims 1 and 2, characterized in that the polyurethane thermoplastic elastomer (5) undergoes a reduction in viscosity of at least 60 % after 30 days at 120°C.

4. Pipe according to one of Claims 1 to 3, characterized in that the polyurethane thermoplastic elastomer (5) has a viscosity at 200°C within the limits below:
| Corrected shear rate s⁻¹ | Viscosity in kPa·s | |
|---|---|---|
| 4.09 | 0.7 | 1.3 |
| 13.64 | 0.25 | 0.85 |
| 36.15 | 0.19 | 0.78 |
| 122.91 | 0.12 | 0.70 |

5. Pipe according to one of Claims 1 to 4, characterized in that the intermediate polyurethane thermoplastic elastomer (5) layer has a thickness of 0.1 to 2 mm from the apex of the flexible metal pipe.
